# EUROPEAN PATENT SPECIFICATION

(11) **EP 3 680 919 B1**
(45) Date of publication and mention of the grant of the patent: **08.12.2021**
(21) Application number: 20150450.3
(22) Date of filing: 07.01.2020
(51) Int. Cl.: H01F 3/08, H01F 17/04, H01F 41/02

(54) **CORE COMPONENT, METHOD OF MANUFACTURING SAME, AND INDUCTOR**
KERNKOMPONENTE, HERSTELLUNGSVERFAHREN DAFÜR UND INDUKTOR
COMPOSANT DE NOYAU, SON PROCÉDÉ DE FABRICATION ET INDUCTEUR

(30) Priority: 11.01.2019 JP 2019003547
(43) Date of publication of application: 15.07.2020
(73) Proprietor: Kyocera Corporation, Kyoto-shi Kyoto 612-8501 (JP)
(72) Inventor: OCHIAI, Hitomi, Kyoto-shi, Kyoto 612-8501 (JP); SHINGU, Masamichi, Kyoto-shi, Kyoto 612-8501 (JP); KITAGAWA, Yuki, Kyoto-shi, Kyoto 612-8501 (JP); MORI, Hideki, Kyoto-shi, Kyoto 612-8501 (JP); TAKAYAMA, Mitsuya, Kyoto-shi, Kyoto 612-8501 (JP)
(74) Representative: Viering, Jentschura & Partner mbB Patent- und Rechtsanwälte

(56) References cited:
- JP-A- 2003 164 082
- JP-A- 2005 197 272
- JP-A- 2007 063 099
- JP-A- 2011 223 025
- US-A1- 2017 330 672
- US-B2- 6 656 417

## Description

### BACKGROUND OF THE INVENTION

### 1. Field of the Invention

The present invention relates to a core component made of a sintered body of an inorganic powder, a method of manufacturing the core component, and an inductor.

### 2. Description of Related Art

Conventionally, when winding a conductive wire, for example, a conductive wire covered with an insulating material such as polyurethane or polyester, around a winding portion of a core component such as a ferrite core, the conductive wire is mounted in a state of being aligned with the winding portion by fixing the end of the conductive wire to any one of the flange portion provided at both ends of the winding portion, and feeding the conductive wire from one end to the other end of the winding portion while bringing adjacent conductive wires into contact with each other.

Recently, as shown in Japanese Patent Application Laid-Open No. 2017-204596 and Japanese Patent Application Laid-Open No. 2009-277802, the miniaturization of electronic devices such as portable terminals is progressing, and the demand for miniaturization of core components mounted on such electronic devices is also increasing. Further, Japanese Patent Application Laid-Open No. 2017-204596 discloses that the conductive wire which is wound around the winding portion is also thinned, and the diameter thereof is as thin as about 20 µm.

JP 2005 197272 A discloses a ferrite core having a bonding face to other ferrite core, wherein maximum height Ry of the bonding face measured by a method conforming to JIS-B0601 is 10-46 µm (46 µm is excluded), and the width of a grain boundary clearance appearing between two adjacent ferrite particles is 5-31 µm (31 µm is excluded) for ferrite particles exposed to the bonding face.

JP 2011 223025 A discloses a ceramic core comprising a core part and a leg for holding the core part by both edges thereof, measuring 1.1 mm or less in the lengthwise direction and 0.6 mm or less in the breadthwise direction in a plan view. The edge of a protruding part of the leg in the breadthwise direction of the ceramic core has its corners and ridgelines curved at a radius of curvature of 5-25 µm.

### SUMMARY OF THE INVENTION

The present invention provides a core component according to claim 1, a method according to claim 5, and an inductor according to claim 7. Further embodiments of the present invention are disclosed in the dependent claims.

### BRIEF DESCRIPTION OF THE DRAWINGS

FIG. 1A is a side view of a core component according to an embodiment of the present disclosure, and FIG. 1B is a sectional view thereof taken along line X-X, and FIG. 1C is a sectional view thereof taken along line Y-Y;
FIG. 2A and FIG. 2B are a cross-sectional view and a longitudinal-sectional view, respectively, showing how a core component according to an embodiment of the present disclosure is molded with a molding die;
FIG. 3A and FIG. 3B are respectively a cross-sectional view and a longitudinal-sectional view showing a state after molding with a molding die; and
FIG. 4A is a partial enlarged cross-sectional view of the core component, and FIG. 4B is a partial enlarged cross-sectional view of another core component.

### DETAILED DESCRIPTION OF PREFERRED EMBODIMENTS

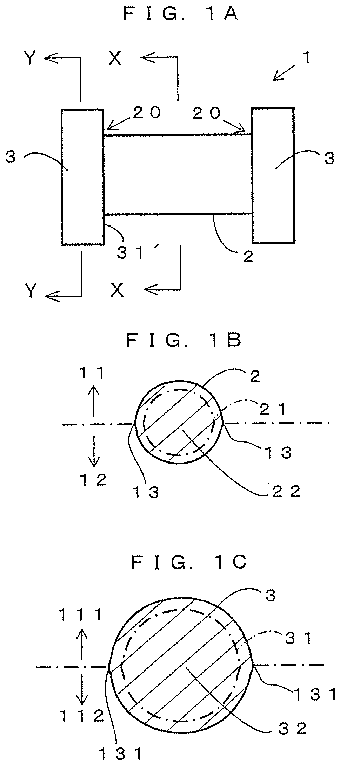

Hereinafter, core components according to an embodiment of the present disclosure will be described. As shown in FIG. 1A, a core component 1 includes a columnar winding portion 2 and a flange portion 3 integrally formed with the winding portion at both axial ends of the winding portion. The core component 1 is made of a sintered body of an inorganic powder such as alumina in addition to ferrite. A conductive wire (not shown) is wound around the winding portion 2. Both ends of the conductive wire are connected to the lead-out electrodes formed on the flange portion 3. For example, the length in the axial direction of the winding portion 2 is 1 mm to 2 mm, and the diameter is 0.5 mm to 2 mm. Further, the length (width) of each flange portion 3 in the axial direction is 0.2 mm to 0.8 mm, and the diameter is 1.5 mm to 4 mm.

The winding portion 2 has a cutting level difference (Rδc) of the surface roughness curve of 0.2 µm or more and 2 µm or less. The cutting level difference (R5c) represents the difference between the cutting level at a 25% loading length rate in the surface roughness curve and the cutting level at a 75% loading length rate in the roughness curve. The cutting level difference (Rδc) is a parameter that represents both the axial direction and the radial direction.

Similarly, the cutting level difference Rδc of the roughness curve on the surface of the flange portion 3 is preferably 0.2 µm or more and 2 µm or less.

When the cutting level difference (R5c) is 0.2 µm or more, an appropriate anchor effect can be given to the conductive wire. Therefore, the slip of the conductive wire is appropriately suppressed, the winding installation becomes easy, and the winding of the conductive wire to the winding portion 2 can be performed with high accuracy, so that the occurrence of winding deviation or the like can be prevented. On the other hand, the cutting level difference (R5c) is 2 µm or less, so that it is possible to suppress the variation in the intervals between the wound conductive wires and the height difference between the adjacent conductive wires.

Moreover, it is preferable that the root mean square height (Rq) in a roughness curve be 0.07 µm or more and 2.5 µm or less. When the root mean square height (Rq) is 0.07 µm or more, an appropriate anchor effect can be given to the conductive wire, which facilitates the mounting. On the other hand, when the conductive wire is wound with a root mean square height (Rq) of 2.5 µm or less, the risk of disconnection can be reduced.

The winding portion 2 is pressure-molded at a high pressure by a lower punch 5 and an upper punch 6 as described later, so that the surface layer portion 21 of the winding portion 2 is denser than the surface layer portion 31' of the inner portion of the flange portion 3 shown in FIG. 1A. Therefore, when the conductive wire is wound, it is possible to reduce the risk of particle shedding caused by the winding.

The cutting level difference Rδc and the root mean square height (Rq) of the roughness curve are in accordance with JIS B 0601: 2001, and can be measured by a ultra-depth color 3D shape measuring microscopes (for example, VK-9500 manufactured by Keyence Corporation). The measurement conditions are as follows; measurement mode: color ultra depth, gain: 953, measurement resolution in the height direction (pitch): 0.05 µm, magnification: 400 times, cutoff value λₛ: 2.5 µm, cutoff value λ_{c}: 0.08 mm.

Here, it is sufficient that the measurement range per one location is 580 µm to 700 µm × 280 µm to 380 µm when the winding portion 2 is to be measured, and 70 µm to 170 µm × 500 µm to 550 µm when the flange portion 3 is to be measured.

In the core component 1 of the present embodiment, as shown in FIG. 1B, when the winding portion 2 is observed in a cross section perpendicular to the axial direction, the surface layer portion 21 of the winding portion 2 has an area occupancy of voids smaller than that of an inside 22 of the winding portion 2. For example, the area occupancy of voids in the surface layer portion 21 of the winding portion 2 is 0.5 to 3%.

Therefore, since the surface layer portion 21 of the winding portion 2 is dense, the strength of the winding portion 2 is improved, the resistance to deformation is improved, and the particle shedding is also suppressed.

Here, the surface layer portion 21 refers to a region having a depth of 0.22 mm or less from the surface of the winding portion 2 toward the axial center. The inside 22 refers to a region excluding the surface layer portion 21. Further, in order to obtain the area occupancy of voids, for example, the portion where the size and distribution of the voids are observed on average is selected among the mirror surface of each of the surface layer portion 21 and the inside 22 obtained by polishing them using diamond abrasive grains having an average particle diameter of 1 µm (this mirror surface is the cross section perpendicular to the axial direction of the winding portion 2). For example, the range in which the area is 3.84 × 10⁻² mm² (lateral length is 0.226 mm, longitudinal length is 0.170 mm) is photographed with a scanning electron microscope at a magnification of 500 to obtain an observation image. Then, for this observation image, the area occupancy of voids can be determined by a method called the particle analysis using the image analysis software "A-Zou Kun (ver 2.52)" (registered trademark, manufactured by Asahi Kasei Engineering Corporation, in the following description, the description of the image analysis software "A-Zou Kun" refers to the image analysis software manufactured by Asahi Kasei Engineering Corporation).

The area occupancy of voids of the flange portion 3 may have the same relationship as that of the winding portion 2. That is, as shown in FIG. 1C, when the flange portion 3 is observed in a cross section perpendicular to the axial direction, a surface layer portion 31 of the flange portion 3 has an area occupancy of voids smaller than an area occupancy of voids of an inside 32 of the flange portion 3. For example, the area occupancy of voids in the surface portion of the flange portion is 0.5 to 4%.

In addition, it is preferable that a gap C between adjacent voids represented by the following Formula at least in the surface layer portion 21 of the winding portion 2 be 6 to 12 µm.

Formula: C = L - R

where, L is the average value of the distance between the centers of gravity between adjacent voids in the surface layer portion 21 or the inside 22, and R is the average value of the equivalent circle diameters of the voids in the surface layer portion 21 or the inside 22.

At this time, it is more preferable that the voids present in the surface layer portion 21 have a larger gap C between adjacent voids than the voids present in the inside 22. Specifically, it is preferable that the difference between the gap C_{S1} between the voids in the surface layer portion 21 and the gap C_{S2} between the voids in the inside 22 obtained from the above formula be 1 µm or more.

As described above, since the void distribution at least in the surface layer portion 21 of the winding portion 2 is sparse, so that the particle shedding generated from the inside and the outline of the voids is reduced, and when the conductive wire is wound around the winding portion 2, it is not likely to cause damage to the conductive wire such as disconnection.

As in the winding portion 2, the voids present in the surface layer portion 31 of the flange portion 3 may have a larger gap C between adjacent voids shown by the above formula than the voids present in the inside 32. Specifically, the difference between the gap C_{F1} between the voids in the surface layer portion 31 and the gap C_{F2} between the voids in the inside 32 is 1 µm or more.

Here, the surface layer portion 31 refers to a region having a depth of 0.22 mm or less from the surface of the flange portion 3 toward the axial center. The inside 32 refers to a region excluding the surface layer portion 31.

The average value of the distance between the centers of gravity between the voids and the average value of the equivalent circle diameters of the voids can be determined by the following method.

First, the portion where the size and distribution of the voids are observed on average is selected among the mirror surface of each of the surface layer portion and the inside obtained by polishing them using diamond abrasive grains (this mirror surface is the cross section perpendicular to the axial direction of the winding portion 2). For example, the range in which the area is 3.84 × 10⁻² mm² (lateral length is 0.226 mm, longitudinal length is 0.170 mm) is photographed with a scanning electron microscope at a magnification of 500 to obtain an observation image. Next, using the above-mentioned image analysis software "A-Zou Kun", the average value of the distances between the centers of gravity of the voids can be determined by the distance-between-centroid method of dispersion measurement.

In addition, the average value of the equivalent circle diameters of the voids can be determined by performing analysis using the same observation image as the above-described observation image by means of the particle analysis using the image analysis software "A-Zou Kun".

As the setting conditions of the distance-between-centroid method and the particle analysis, for example, a threshold value which is an index indicating light and dark of an image may be 83, lightness may be dark, a small figure removing area may be 0.2 µm² and a noise removing filter may be present. In the above measurement, the threshold value is 83, but the threshold value may be adjusted according to the brightness of the observation image. The lightness is dark, the method of binarization is manual, and the small figure removing area is 0.2 µm² and a noise removing filter is present. The threshold value may be manually adjusted so that a marker whose size changes according to the threshold value in the observation image matches the shape of the voids.

As shown in FIG. 1A, the radius of curvature of a corner portion 20 where the winding portion 2 and the flange portion 3 intersect is preferably equal to or smaller than the diameter of the conductive wire. Specifically, the radius of curvature of the corner portion 20 is 40 µm or less, preferably 10 to 30 µm. This can prevent offset of the conductive wire.

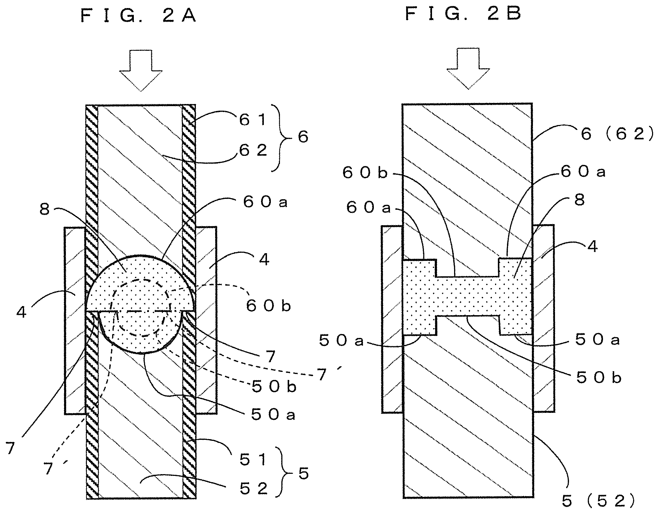

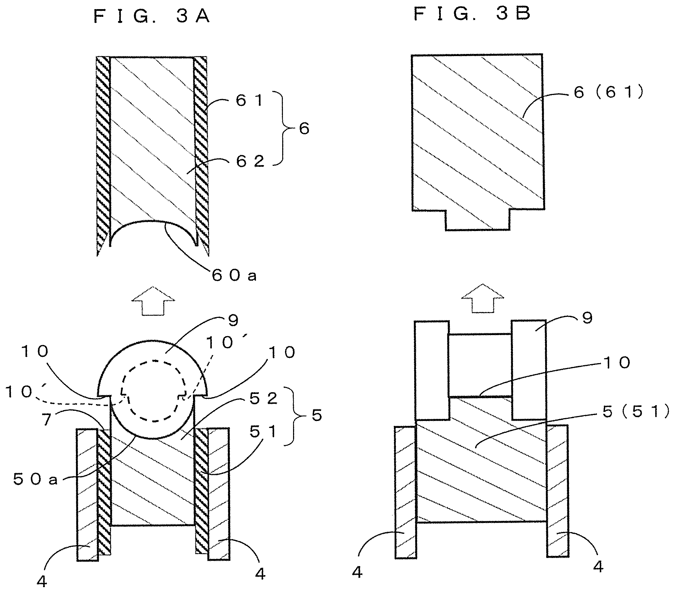

Next, a method of manufacturing the core component 1 by press molding will be described based on FIGS. 2 and 3. FIGS. 2A and 2B are a cross-sectional view and a longitudinal-sectional view, respectively, showing the molding state of the core component 1. The press molding apparatus used includes a die 4, the lower punch 5 and the upper punch 6. The lower punch 5 includes a first lower punch 51 and a second lower punch 52. The upper punch 6 includes a first upper punch 61 and a second upper punch 62.

As shown in FIG. 2A, the lower punch 5 and the upper punch 6 have arc-shaped pressing surfaces 50a, 50b, 60a, and 60b for forming the winding portion 2 and the flange portion 3, respectively. The pressing surfaces 50a and 50b of the lower punch 5 and the pressing surfaces 60a and 60b of the upper punch 6 at a portion forming the winding portion 2 and the flange portion 3 have different radiuses of curvature from each other. In the present embodiment, the radius of curvature of the pressing surfaces 60a and 60b of the upper punch 6 is larger than the radius of curvature of the pressing surfaces 50a and 50b of the lower punch 5. Conversely, the radius of curvature of the pressing surfaces 50a and 50b of the lower punch 5 may be larger than the radius of curvature of the pressing surfaces 60a and 60b of the upper punch 6.

Therefore, a stepped portion 7 is formed on both sides in a state where the pressing surfaces 50a and 50b of the lower punch 5 and the pressing surfaces 60a and 60b of the upper punch 6 overlap with each other.

In the present invention, at least the radius of curvature of the pressing surface 50b of the lower punch 5 and the radius of curvature of the pressing surface 60b of the upper punch 6 are different from each other at a portion where the winding portion 2 is to be formed.

In molding, first, the lower punch 5 is fixed in the die 4 as shown in FIG. 2A, and an inorganic powder 8 as the raw material is supplied to the pressing surfaces 50a and 50b of the upper surface of the lower punch 5. Then, the upper punch 6 is lowered to press the inorganic powder 8 between the lower punch 5 and the upper punch 6.

The molding pressure at the time of pressure molding is 98 MPa or more, preferably 196 to 490 MPa. Since such a high pressure can be used for pressure molding, the resulting compact has a dense and closely packed surface, in particular, on the surface portion, and as described above, the area occupancy of voids of the surface layer portion 21 of the winding portion 2 can be smaller than that of the inside 22 of the winding portion.

For the same reason, the void distribution at least in the surface layer portion 21 of the winding portion 2 can be made sparse, and the gap C between adjacent voids can be made 6 to 12 µm.

In addition, the compact has a dense and closely packed surface, in particular, on the surface portion, so that the cutting level difference Rδc of the roughness curve of the surface of the winding portion 2 is 0.2 to 2 µm.

Furthermore, since the surface shape of the molding die (lower punch 5 and upper punch 6 described later) can be faithfully reflected because of pressure molding with high pressure, the radius of curvature of the corner portion 20 where the winding portion 2 and the flange portion 3 intersect may be less than or equal to the diameter of the conductive wire.

Such high pressure can be applied because, as described above, the pressing surfaces 50a and 50b of the lower punch 5 and the pressing surfaces 60a and 60b of the upper punch 6 have different radiuses of curvature. On the other hand, when the pressing surfaces 50a and 50b of the lower punch 5 and the pressing surfaces 60a and 60b of the upper punch 6 have the same radius of curvature, the compact cannot be taken out of the molding die when pressurized with high pressure. Therefore, in such an example which does not form part of the present invention, the core component 1 cannot be pressurized at high pressure but must be pressurized at low pressure. Consequently, such a core component 1 formed by pressure molding has a lot of voids, the strength is inferior, and further, it is easy to generate the particle shedding.

As described above, since the pressure molding according to the present invention can be performed with high pressure, the surface quality of the winding portion can be made appropriate. Moreover, when the conductive wire is wound, it is possible to reduce the risk of particle shedding caused by the winding.

After molding, as shown in FIGS. 3A and 3B, the die 4 is lowered relative to the lower punch 5 and the upper punch 6 so that the stepped portion 7 and the upper end face of the die 4 on the overlapping surface of the lower punch 5 and the upper punch 6 have approximately the same height. Next, the upper punch 6 is moved upward with respect to the lower punch 5. At this time, first, the first upper punch 61 on both sides is raised, and then the second upper punch 62 is raised. This facilitates separation of the upper punch 6 from the compact 9.

The second lower punch 52 is relatively raised with respect to the die 4 simultaneously with or after the rise of the upper punch 6. As a result, the compact 9 can be pushed up, and the compact 9 can be easily taken out.

After removing the raw material powder adhering to the obtained compact 9 by air blow or the like if necessary, for example, the compact 9 is held at the maximum temperature of 1000 to 1200°C for 2 to 5 hours in an air atmosphere to obtain the sintered body. Further, the sintered body is subjected to polishing such as barrel polishing, if necessary, to obtain the core component 1.

A stepped portion 10 corresponding to the stepped portion 7 due to the difference in the radiuses of curvature of the pressing surfaces 50a and 50b of the lower punch 5 and the pressing surfaces 60a and 60b of the upper punch 6 is formed on the surface of the compact 9 corresponding to the winding portion 2 and the flange portion 3. If the stepped portion 10 has a problem in winding the conductive wire around the surface of the winding portion 2, it is preferable to remove as much as possible by polishing.

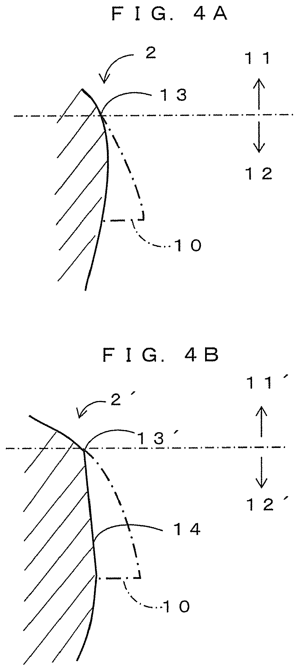

As shown in FIG. 4A, for the core component 1 obtained by polishing, the winding portion 2 has a first region 11 having a curved outer peripheral surface with a large radius of curvature and a second region 12 having a curved outer peripheral surface with a small radius of curvature in a cross section orthogonal to the axial center, and the first region 11 and the second region 12 are connected via a projection 13. At this time, the height of the projection 13 is preferably equal to or smaller than the diameter of the conductive wire wound around the outer peripheral surface of the winding portion 2. As a result, the occurrence of disconnection and offset of the conductive wire can be suppressed.

In addition, the stepped portion 10 may be largely removed by polishing, and the portion may be processed into a planar shape. In this case, as shown in FIG. 4B, in the cross section orthogonal to the axial center, a winding portion 2' has a first region 11' having a curved outer peripheral surface with a large radius of curvature, and a second region 12' consisting of a flat portion 14 whose outer peripheral surface is connected to the first region 11' and a curved surface portion continuous with this with a small radius of curvature, and the first region 11' and the second region 12' are connected via a projection 13'.

The above polishing process may be applied not only to the winding portions 2 and 2' but also to the flange portion 3 in the same manner. That is, as shown in FIG. 1C, in the cross section orthogonal to the axial center, the flange portion 3 has a third region 111 having a curved outer peripheral surface with a large radius of curvature, and a fourth region 112 including a curved surface portion having a curved surface with a small radius of curvature, and the third region 111 and the fourth region 112 are connected via a second projection 131. As a result, it is possible to suppress the occurrence of particle shedding from the second projection 131.

The second projection 131 preferably has a curved outer peripheral surface. Furthermore, the outer peripheral surface of the second projection 131 preferably has a radius of curvature smaller than that of the outer peripheral surface of the flange portion. As a result, the residual stress in the first projection 13 is reduced, so that the first projection 13 is less likely to be brittlely fractured, and the occurrence of particle shedding due to the brittle fracture is reduced.

As in the winding portion 2 shown in FIG. 4B, the fourth region 112 may include the flat portion 14 whose outer peripheral surface is connected to the third region 111 and the curved surface portion continuous with this with a small radius of curvature.

The obtained core component 1 is suitably used as an inductor by winding a conductive wire around the winding portions 2 and 2'. The application of the core component 1 of the present disclosure is not limited to the inductor, and may be applied to the case where members having flanges at both ends and a central portion having a columnar shape and a smooth curved surface shape are formed of ceramics or the like. For example, in the case of manufacturing, with a ceramic, a tape guide for guiding a magnetic tape or the like in which the tape guide has flanges at both ends of a columnar body, the manufacturing can be easily performed by using the core component manufacturing method of the present disclosure.

### Example

Hereinafter, the core component of the present disclosure will be described in detail by way of Examples and Comparative Example.

### (Example)

The ferrite powder was pressure-molded at 384 MPa using the molding apparatus shown in FIGS. 2 and 3 and then sintered at a predetermined temperature to produce a core component.

### (Comparative Example)

Only a central portion of the columnar compact of a ferrite powder was cut and processed to produce a core component having a winding portion and a flange portion at both ends thereof of a sintered body obtained by sintering.

### (Measurement of surface quality of core component)

About the obtained core component, using the ultra-depth color 3D shape measuring microscope (VK-9500 mentioned above), under the following measurement conditions, the cutting level difference (R5c) of the roughness curve which represents the difference between the cutting level at 25% loading length rate in the surface roughness curve and the cutting level at the 75% loading length rate in the roughness curve, and the root mean square height (Rq) of the roughness curve were measured. The results are shown in Table 1.

Note that the measurement of the winding portion is performed at two positions on the surrounding surface which exists in the mutually opposite directions with respect to the axial center. The measurement of the flange portion is performed at two positions on each flange portion at both ends of the winding portion, and there are a total of four positions for one core component. The values in Table 1 are the average value thereof (where, the number of samples of the core components is four in Example and two in Comparative Example).
Gain: 953
Measurement resolution in the height direction (pitch): 0.05 µm
Magnification: 400 times
Cut-off value λs: 2.5 µm
Cut-off value λc: 0.08 mm
Distance: 200 µm

**[Table 1]**

| | | Rδc (µm) | Rq (µm) |
|---|---|---|---|
| Example | Winding portion | 0.88 | 1.22 |
| | Flange portion | 0.69 | 1.14 |
| | | | |
| Comparative Example | Winding portion | 2.71 | 4.00 |
| | Flange portion | 0.91 | 0.99 |

## Claims

1. A core component (1) made of a sintered body of an inorganic powder (8) containing ferrite, the core component (1) comprising:
a columnar winding portion (2) including opposite axial ends, and a flange portion (3) integrally formed with the winding portion (2) at both of the axial ends of the winding portion (2),
wherein a cutting level difference (Rδc) of a roughness curve representing a difference between a cutting level at 25% loading length rate in the roughness curve and a cutting level at 75% loading length rate in the roughness curve of a surface of the winding portion (2) is 0.2 µm or more and 2 µm or less, and
**characterized in that**
the winding portion (2) has a first region (11) having a curved outer peripheral surface with a large radius of curvature and a second region (12) having a curved outer peripheral surface with a small radius of curvature in a cross section orthogonal to the axial direction.

2. The core component (1) according to claim 1, wherein a root mean square height (Rq) in the roughness curve is 0.07 µm or more and 2.5 µm or less.

3. The core component (1) according to claim 1, wherein the winding portion (2) includes a surface layer portion (21) and the flange portion (3) includes an inner portion with a surface layer portion (31'), and the surface layer portion (21) of the winding portion (2) is denser than the surface layer portion (31') of the inner portion of the flange portion (3).

4. The core component (1) according to claim 1, wherein a cutting level difference (Rδc) of a roughness curve representing a difference between a cutting level at 25% loading length rate in the roughness curve and a cutting level at 75% loading length rate in the roughness curve of a surface of the flange portion (3) is 0.2 µm or more and 2 µm or less.

5. A method of manufacturing the core component (1) according to claim 1, the method comprising:
filling and pressure molding an inorganic powder (8) containing ferrite between an upper punch (6) and a lower punch (5) each of which has an arc-shaped pressing surface (60a, 60b, 50a, 50b) for forming the winding portion (2) and the flange portion (3) into a pressure-molded compact (9); and
sintering the pressure-molded compact (9),
wherein the upper punch (6) includes a pressing surface (60a, 60b), the lower punch (5) includes a pressing surface (50a, 50b), the pressing surface (60a, 60b) of the upper punch (6) and the pressing surface (50a, 50b) of the lower punch (5) including a portion (60b, 50b) forming the winding portion (2), and the pressing surface (60a, 60b) of the upper punch (6) and the pressing surface (50a, 50b) of the lower punch (5) at least at the portion (60b, 50b) forming the winding portion (2) have different radiuses of curvature, and
a molding pressure at a time of the pressure molding is 98 Mpa or more.

6. The method for producing the core component (1) according to claim 5, further comprising polishing the sintered pressure-molded compact (9) obtained by sintering.

7. An inductor, the inductor comprising: the core component (1) according to claim 1 and a conductive wire wound around the winding portion (2) of the core component (1).

## Patentansprüche

1. Kernkomponente (1), die aus einem Sinterkörper aus einem anorganischen Pulver (8), das Ferrit enthält, hergestellt ist, wobei die Kernkomponente (1) aufweist:
einen säulenförmigen Wicklungsabschnitt (2), der entgegengesetzte axiale Enden aufweist, und einen Flanschabschnitt (3), der integral mit dem Wicklungsabschnitt (2) an beiden axialen Enden des Wicklungsabschnitts (2) ausgebildet ist,
wobei eine Schneidhöhendifferenz (Rδc) einer Rauigkeitskurve, die eine Differenz zwischen einer Schneidhöhe bei einer 25%igen Lastlängenrate in der Rauigkeitskurve und einer Schneidhöhe bei einer 75%igen Lastlängenrate in der Rauigkeitskurve einer Oberfläche des Wicklungsabschnitts (2) darstellt, 0,2 µm oder mehr und 2 µm oder weniger beträgt, und
**dadurch gekennzeichnet, dass**
der Wicklungsabschnitt (2) einen ersten Bereich (11) mit einer gekrümmten Außenumfangsfläche mit einem großen Krümmungsradius und einen zweiten Bereich (12) mit einer gekrümmten Außenumfangsfläche mit einem kleinen Krümmungsradius in einem Querschnitt orthogonal zur Axialrichtung hat.

2. Kernkomponente (1) gemäß Anspruch 1, wobei eine Höhe des quadratischen Mittelwerts (Rq) in der Rauigkeitskurve 0,07 µm oder mehr und 2,5 µm oder weniger beträgt.

3. Kernkomponente (1) gemäß Anspruch 1, wobei der Wicklungsabschnitt (2) einen Oberflächenschichtabschnitt (21) aufweist und der Flanschabschnitt (3) einen inneren Abschnitt mit einem Oberflächenschichtabschnitt (31') aufweist, und der Oberflächenschichtabschnitt (21) des Wicklungsabschnitts (2) dichter als der Oberflächenschichtabschnitt (31') des inneren Abschnitts des Flanschabschnitts (3) ist.

4. Kernkomponente (1) gemäß Anspruch 1, wobei eine Schneidhöhendifferenz (Rδc) einer Rauigkeitskurve, die eine Differenz zwischen einer Schneidhöhe bei einer 25%igen Lastlängenrate in der Rauigkeitskurve und einer Schneidhöhe bei einer 75%igen Lastlängenrate in der Rauigkeitskurve einer Oberfläche des Flanschabschnitts (3) darstellt, 0,2 µm oder mehr und 2 µm oder weniger beträgt.

5. Verfahren zum Herstellen der Kernkomponente (1) gemäß Anspruch 1, wobei das Verfahren aufweist:
Einfüllen und Druckformen eines anorganischen Pulvers (8), das Ferrit enthält, zwischen einem oberen Presswerkzeug (6) und einem unteren Presswerkzeug (5), von denen jedes eine bogenförmige Pressfläche (60a, 60b, 50a, 50b) aufweist, zum Formen des Wicklungsabschnitts (2) und des Flanschabschnitts (3) zu einem druckgeformten Presskörper (9), und
Sintern des druckgeformten Presskörpers (9),
wobei das obere Presswerkzeug (6) eine Pressfläche (60a, 60b) aufweist, das untere Presswerkzeug (5) eine Pressfläche (50a, 50b) aufweist, die Pressfläche (60a, 60b) des oberen Presswerkzeugs (6) und die Pressfläche (50a, 50b) des unteren Presswerkzeugs (5) einen den Wicklungsabschnitt (2) ausbildenden Abschnitt (60b, 50b) aufweisen, und die Pressfläche (60a, 60b) des oberen Presswerkzeugs (6) und die Pressfläche (50a, 50b) des unteren Presswerkzeugs (5) zumindest an dem den Wicklungsabschnitt (2) ausbildenden Abschnitt (60b, 50b) unterschiedliche Krümmungsradien aufweisen, und
ein Formdruck zu einem Zeitpunkt des Druckformens 98 Mpa oder mehr beträgt.

6. Verfahren zum Herstellen der Kernkomponente (1) gemäß Anspruch 5, ferner aufweisend das Polieren des durch Sintern erhaltenen gesinterten druckgeformten Presskörpers (9).

7. Induktor/Spule, wobei der Induktor/die Spule aufweist:
die Kernkomponente gemäß Anspruch 1 und einen leitfähigen Draht, der um den Wicklungsabschnitt (2) der Kernkomponente (1) gewickelt ist.

## Revendications

1. Un composant de noyau (1) fait d'un corps fritté d'une poudre inorganique (8) contenant de la ferrite, ledit composant de noyau (1) comprenant :
une partie d'enroulement en forme de colonne (2) ayant des extrémités axiales opposées, et une partie de bride (3) formée intégralement avec la partie d'enroulement (2) aux deux extrémités axiales de la partie d'enroulement (2),
dans lequel une différence de niveau de coupe (Rδc) d'une courbe de rugosité représentant une différence entre un niveau de coupe à un taux de longueur de charge de 25% dans la courbe de rugosité et un niveau de coupe à un taux de longueur de charge de 75% dans la courbe de rugosité d'une surface de la partie d'enroulement (2) est de 0,2 µm ou plus et de 2 µm ou moins, et
**caractérisé en ce que**
la partie d'enroulement (2) a une première région (11) ayant une surface périphérique extérieure incurvée avec un grand rayon de courbure et une seconde région (12) ayant une surface périphérique extérieure incurvée avec un petit rayon de courbure dans une section transversale orthogonale à la direction axiale.

2. Le composant de noyau (1) selon la revendication 1, dans lequel une hauteur de la moyenne quadratique (Rq) dans la courbe de rugosité est de 0,07 µm ou plus et de 2,5 µm ou moins.

3. Le composant de noyau (1) selon la revendication 1, dans lequel la partie d'enroulement (2) comprend une partie de couche de surface (21) et la partie de bride (3) comprend une partie interne ayant une partie de couche de surface (31'), et la partie de couche de surface (21) de la partie d'enroulement (2) est plus dense que la partie de couche de surface (31') de la partie interne de la partie de bride (3).

4. Le composant de noyau (1) selon la revendication 1, dans lequel une différence de niveau de coupe (Rδc) d'une courbe de rugosité représentant une différence entre un niveau de coupe à un taux de longueur de charge de 25% dans la courbe de rugosité et un niveau de coupe à un taux de longueur de charge de 75% dans la courbe de rugosité d'une surface de la partie de bride (3) est de 0,2 µm ou plus et de 2 µm ou moins.

5. Un procédé de fabrication du composant de noyau (1) selon la revendication 1, le procédé comprenant les étapes suivantes consistant à :
charger et mouler sous pression une poudre inorganique (8) contenant de la ferrite entre une matrice de presse supérieure (6) et une matrice de presse inférieure (5), dont chacune a une surface de pression arquée (60a, 60b, 50a, 50b) pour former la partie d'enroulement (2) et la partie de bride (3) en un corps pressé moulé sous pression (9), et
fritter le corps pressé moulé sous pression (9),
dans lequel la matrice de presse supérieure (6) a une surface de pression (60a, 60b), la matrice de presse inférieure (5) a une surface de pression (50a, 50b), la surface de pression (60a, 60b) de la matrice de presse supérieure (6) et la surface de pression (50a, 50b) de la matrice de presse inférieure (5) comprenant une partie (60b, 50b) formant la partie d'enroulement (2), et la surface de pression (60a, 60b) de la matrice de presse supérieure (6) et la surface de pression (50a, 50b) de la matrice de presse inférieure (5) ayant des rayons de courbure différents au moins au niveau de la partie (60b, 50b) formant la partie d'enroulement (2), et
une pression de moulage à un moment du moulage sous pression est de 98 Mpa ou plus.

6. Le procédé de fabrication du composant de noyau (1) selon la revendication 5, comprenant en outre le polissage du corps pressé moulé sous pression (9) fritté obtenu par frittage.

7. Un inducteur, l'inducteur comprenant : le composant de noyau selon la revendication 1 et un fil conducteur enroulé autour de la partie d'enroulement (2) du composant de noyau (1) .
